# EUROPÄISCHE PATENTSCHRIFT

(11) **EP 0 772 148 B1**
(45) Veröffentlichungstag und Bekanntmachung des Hinweises auf die Patenterteilung: **06.02.2002**
(21) Anmeldenummer: 96114090.2
(22) Anmeldetag: 03.09.1996
(51) Int. Cl.: G06K 11/08

(54) **Optische Erfassungseinrichtung**
Optical detecting device
Dispositif de détection optique

(30) Priorität: 26.10.1995 DE 19539955
(43) Veröffentlichungstag der Anmeldung: 07.05.1997
(73) Patentinhaber: Sick AG, 79183 Waldkirch, Breisgau (DE)
(72) Erfinder: Schwarz, Franz, 79286 Glottertal (DE)
(74) Vertreter: Finsterwald, Manfred, Dipl.-Ing., Dipl.-Wirtsch.-Ing.

(56) Entgegenhaltungen:
- EP-A- 0 221 712
- EP-A- 0 366 112
- EP-A- 0 577 308
- DE-A- 2 355 616
- GB-A- 1 242 110
- PATENT ABSTRACTS OF JAPAN vol. 7, no. 67 (P-184) [1212] , 19.März 1983 & JP 57 211637 A (KOKUSAI DENKI K.K.), 25.Dezember 1982,
- PATENT ABSTRACTS OF JAPAN vol. 8, no. 101 (P-273) [1538] , 12.Mai 1984 & JP 59 014082 A (HAJIME ENOMOTO), 24.Januar 1984,

## Beschreibung

Die Erfindung betrifft eine optische Erfassungseinrichtung zur Bestimmung der Position eines Zeigemediums auf bzw. vor einer Präsentationsfläche mit einem unmittelbar vor oder geringfügig beabstandet von der Präsentationsfläche parallel zu dieser angeordneten optischen Überwachungsfeld.

Derartige Erfassungseinrichtungen werden beispielsweise als Eingabemedium für die Ablaufsteuerung von interaktiven Computerprogrammen aller Art eingesetzt. Üblicherweise wird eine solche Erfassungseinrichtung als "Touch-Screen" bezeichnet.

Neben den genannten optischen Erfassungseinrichtungen kommen auch solche mit resistiver Technik zum Einsatz. Bei diesen Erfassungsvorrichtungen ist ein Spannungsmesser vorgesehen, welcher in der Regel die Berührung einer Plastik-auf-Glas-Membran registriert.
Nachteilig an den Erfassungseinrichtungen mit resistiver Technik ist, daß die genannte Membran sich im Laufe der Zeit durch die wiederholt stattfindenden Berührungen abnutzt, was schließlich zu einer Funktionsstörung führen kann.

Demgegenüber haben die eingangs genannten optischen Erfassungseinrichtungen den Vorteil, daß sie berührungslos arbeiten und somit eine höhere Störfestigkeit aufweisen.

Bekannte, auf dem optischen Prinzip basierende Erfassungseinrichtungen der angegebenen Art können beispielsweise aus zwei über Kreuz angeordneten Lichtgittern bestehen, welche vor einer Präsentationsfläche bzw. vor einem Bildschirm das Überwachungsfeld aufbauen. Wenn ein Zeigemedium, beispielsweise der Finger eines Benutzers, auf eine bestimmte Stelle des Bildschirms bewegt wird, werden entsprechende Lichtwege der beiden über Kreuz angeordneten Lichtgitter unterbrochen. Diese unterbrochenen Lichtwege bzw. ihre Position innerhalb der Lichtgitter geben dann Aufschluß über die Position des Zeigemediums im Überwachungsfeld bzw. auf dem Bildschirm.

Nachteilig an den bekannten Erfassungseinrichtungen ist der damit verbundene hohe wirtschaftliche Aufwand bezüglich der technischen Realisierung sowie die ebenfalls vorhandene Störanfälligkeit.

Es ist eine Aufgabe der Erfindung, eine optische Erfassungseinrichtung der eingangs angegebenen Art derart auszubilden, daß sie mit geringem wirtschaftlichen Aufwand realisierbar ist und insbesondere eine hohe Störsicherheit gewährleistet.

Nach einer ersten Lösungsvariante der Erfindung wird diese Aufgabe mit den im Anspruch 1 angegebenen Merkmalen gelöst. Dei Merkmale des Oberbegriffs von Anspruch 1 sind aus EP-A-0 221 712 bekannt.

Nach einer weiteren Lösungsvariante der Erfindung wird die genannte Aufgabe mit den im Anspruch 5 angegebenen Merkmalen gelöst. Die Merkmale des Oberbegriffs von Anspruch 5 sind aus JP-A-57 211 637 bekannt.

Gemäß der ersten Lösungsvariante werden die aus dem Stand der Technik bekannten Lichtgitter beispielsweise durch einen einzelnen Scanner ersetzt, welcher das Überwachungsfeld abtastet und Informationen über die Position des Zeigemediums im Überwachungsfeld liefert.

Dabei kann der Scanner beispielsweise mittels eines über einen Schwingspiegel bzw. ein Spiegelrad umgelenkten Laserstrahls einen Überwachungs-Kreissektor erfassen, in welchem das Überwachungsfeld enthalten ist. Durch die Ermittlung des Abstands des Zeigemediums vom Scanner sowie der Winkelposition innerhalb des Überwachungs-Kreissektors ist dann die Position des Zeigemediums im Überwachungsfeld ableitbar.

Ein Vorteil der Erfindung ist darin zu sehen, daß anstelle des bisher verwendeten, kompliziert aufgebauten Lichtgittersystems ein einzelner, handelsüblicher Scanner eingesetzt werden kann, was bei bestimmten Anwendungsfällen einen deutlich geringeren wirtschaftlichen Aufwand bedingt.

Dieser Vorteil kommt insbesondere dann zum Tragen, wenn große Überwachungsfelder benötigt werden, da zur Überwachung derartiger Überwachungsfelder mit den bisher üblichen Lichtgittern eine Vielzahl von Sender-Empfänger-Einheiten benötigt wurde und nunmehr lediglich ein einzelner Scanner erforderlich ist.

Ein weiterer Vorteil der Erfindung ist darin zu sehen, daß im Vergleich zu den bisher verwendeten Lichtgittern in bestimmten Anwendungsfällen eine höhere Ortsauflösung erzielt werden kann.

Zudem hat die Verwendung eines Scanners den Vorteil, daß nicht mehr wie bei den bisher üblichen Lichtgittern rund um das Überwachungsfeld optische Elemente wie Sender, Empfänger und/oder Reflektoren angeordnet werden müssen, sondern daß es genügt, lediglich an einer Stelle, vorzugsweise am Rand des Überwachungsfeldes, einen Scanner vorzusehen. Neben dem Scanner müssen keinerlei weiteren optischen Einrichtungen vorgesehen werden. Aus diesem Grund können die mit einer erfindungsgemäßen optischen Erfassungseinrichtung versehenen Geräte zumindest bei Anwendungen mit großen Überwachungsfeldern mit vergleichsweise reduziertem wirtschaftlichen Aufwand und mit geringeren Abmessungen gefertigt werden als dies bisher möglich war.

Durch die Vorsehung eines Scanners lediglich an einer Stelle, vorzugsweise am Rand des Überwachungsfeldes kann weiterhin gegenüber dem Stand der Technik eine höhere Störfestigkeit erzielt werden, da lediglich an der genannten Stelle eine optisch empfindliche kritische Austrittsfläche vorhanden ist, während sich gemäß dem Stand der Technik eine derart kritische Fläche mit insgesamt deutlich größeren Abmessungen rings um das Überwachungsfeld erstreckt. Durch die erfindungsgemäße Reduzierung dieser kritischen Fläche ist die Gefahr -von eventuellen Verschmutzungen deutlich verringert, was zu einer Erhöhung der Störfestigkeit führt.

Auch die Auswertung der vom Scanner gelieferten Signale kann auf wirtschaftliche Art und Weise mit einfachen und üblichen Programmen ohne Schwierigkeiten bewältigt werden.

Schließlich ist die erfindungsgemäße Erfassungseinrichtung auf einfache Weise nachrüstbar, da an der Präsentationsfläche bzw. am Bildschirm selbst keinerlei bauliche Veränderungen vorgenommen werden müssen.

Bei einer bevorzugten Ausführungsform der Erfindung liegt der vom Scanner erfaßte Winkelbereich in etwa zwischen 90° und 180°. In bestimmten Anwendungsfällen sind jedoch auch andere Winkelbereiche denkbar.

Vorzugsweise wird der Scanner in einem Eckbereich eines im wesentlichen rechteckigen Überwachungsfeldes angeordnet. In diesem Fall kann dann der vom Scanner erfaßte Winkelbereich ungefähr 90° betragen.

Allerdings ist es im Rahmen der Erfindung auch möglich, dem Überwachungsfeld eine beliebige andere Form zu geben und den vom Scanner erfaßten Winkelbereich dann so auszubilden, daß das gewünschte Überwachungsfeld in diesem Winkelbereich enthalten ist.

Normalerweise wird genau ein Scanner vorgesehen, welcher das gesamte Überwachungsfeld erfaßt. Bei besonders großen Überwachungsfeldern oder nicht sehr leistungsfähigen Scannern ist es jedoch auch möglich, mehrere Scanner vorzusehen, von denen jeder jeweils nur einen Teilbereich des gewünschten Überwachungsfeldes erfaßt.

Gemäß der zweiten Lösungsvariante der Erfindung werden anstelle des Scanners ein Entfernungsmesser und entweder ein Winkelmesser oder ein weiterer Entfernungsmesser eingesetzt, die ausgehend von zwei unterschiedlichen Positionen Lichtstrahlen in der Ebene des Überwachungsfeldes aussenden.

Beim Einsatz von Entfernungsmessern ist dann aus den jeweils ermittelten Abständen des Zeigemediums von den Entfernungsmessern problemlos die Position des Zeigemediums im Überwachungsfeld zu bestimmen.

Auch mit dieser Lösungsvariante sind die bereits beschriebenen Vorteile erzielbar.

Ein zu berücksichtigender Unterschied zwischen den genannten Entfernungsmessern und den genannten Winkelmessern besteht darin, daß die Entfernungsmesser einen statischen Lichtstrahl aussenden, welcher auf einen bestimmten Winkelbereich aufgeweitet.ist, während die Winkelmesser in der Regel als Drehstrahlscanner ausgebildet sind, welche einen bewegten Lichtstrahl aussenden, der einen entsprechenden Winkelbereich abscannt. Diese Drehstrahlscanner ermitteln dabei allerdings lediglich Winkel- und keine Abstandswerte. Bei den Entfernungsmessern handelt es sich folglich um statische Systeme, während die Winkelmesser dynamische Systeme darstellen.

Bei einer bevorzugten Ausführungsform der zweiten Lösungsvariante werden beide Entfernungs- bzw. Winkelmesser jeweils im Randbereich des Überwachungsfeldes angeordnet, wobei die Anordnung derart erfolgen muß, daß eine Positionsbestimmung möglich ist. Dies bedeutet, daß die Entfernungs- bzw. Winkelmesser beispielsweise nicht in einander gegenüberliegenden Randbereichen angeordnet werden sollten.

Der von beiden Entfernungs- bzw. Winkelmessern jeweils erfaßte Winkelbereich kann in etwa zwischen 90° und 180° liegen, wobei hier je nach Anwendungsfall auch andere Winkelbereiche denkbar sind.

Bei einem im wesentlichen rechteckigen Überwachungsfeld ist es von Vorteil, wenn die beiden Entfernungs- bzw. Winkelmesser an einander benachbarten Eckbereichen bzw. an einander benachbarten Eckpunkten des Überwachungsfeldes angeordnet sind. In diesem Fall kann der von den beiden Entfernungs- bzw. Winkelmessern jeweils erfaßte Winkelbereich ungefähr 90° betragen.

Bei beiden Lösungsvarianten gemäß der Erfindung kann der Scanner oder die Entfernungs- bzw. Winkelmesser in einem Gehäusebereich untergebracht werden, wodurch die genannten Elemente gegen mechanische Beschädigungen und gegen Verschmutzung geschützt sind. Die einzige Öffnung des genannten Gehäusebereichs kann dabei durch einen Lichtaustrittsspalt gebildet sein, durch den die erforderliche Überwachung erfolgt.

Vorteilhaft ist es, wenn der Scanner oder die Entfernungs- bzw. Winkelmesser bei einem sich im wesentlichen vertikal erstreckenden Überwachungsfeld in dessen oberen Randbereich oder oberhalb dieses Randbereichs angeordnet sind, da dann die beispielsweise durch sich ablagerenden Staub bestehende Verschmutzungsgefahr verringert ist.

Bei beiden Lösungsvarianten gemäß der Erfindung beträgt der Abstand zwischen der Präsentationsfläche und dem Überwachungsfeld bevorzugt zwischen 2 mm und 20 mm, insbesondere ungefähr 5 mm.
Der Minimalabstand zwischen der Präsentationsfläche und dem Überwachungsfeld sollte so groß gewählt sein, daß eine auf der Überwachungsfläche abgelagerte Schmutz- oder Verunreinigungsschicht nicht zu einem Dauersignal führt. Der entsprechende Maximalabstand sollte so bemessen sein, daß auf jeden Fall eine ausreichend eindeutige Positionsbestimmung möglich ist, das heißt, daß eine eindeutige Zuordnung zwischen der Position, an der das Zeigemedium die Überwachungsfläche durchdringt und der Position eines auf der Präsentationsfläche dargestellten Symbols möglich ist. Hierbei ist zu berücksichtigen, daß sich das Zeigemedium nicht immer senkrecht zur Präsentationsfläche bzw. zum Überwachungsfeld erstreckt sondern durchaus auch eine Schräglage aufweisen kann.

Die genannten Abstände können bei geringerer Systemauflösung bzw. größer bemessenen Zeigemedien auch enstprechend größer ausgebildet sein. Bei geringer Systemauflösung ist weiterhin darauf zu achten, daß die verwendeten Zeigemedien ausreichend große Abmessungen aufweisen, so daß eine Erkennung gewährleistet ist.

Präsentationsfläche und Überwachungsfeld können so ausgebildet sein, daß deren Größen einander in etwa entsprechen oder identisch sind. In der Regel sind identische Größen sinnvoll, da eine Erfassung der Position des Zeigemediums im gesamten Bereich der Präsentationsfläche wünschenswert ist.

Besonders bevorzugt läßt sich die Erfindung einsetzen, wenn die Präsentationsfläche als Monitor ausgebildet ist, insbesondere als Monitor einer Größe zwischen 10 und 20 Zoll. In diesem Zusammenhang ist die Erfindung beispielsweise für die Bedienung von interaktiven Computerprogrammen verschiedenster Art (Graphikprogrammen, Geldautomaten, Bedienungssteuerungen von Kopierautomaten, etc.) einsetzbar. Auch das interaktive Fernsehen stellt einen möglichen Anwendungsfall für die vorliegende Erfindung dar.

Es ist jedoch auch möglich, die Erfindung in Verbindung mit als Schaufensterscheiben ausgebildeten Präsentationsflächen anzuwenden, wobei derartige Schaufensterscheiben durchaus Diagonalabmessungen von bis zu 10 m aufweisen können. Beim Einsatz entsprechender Scanner, Entfernungsmesser oder Winkelmesser sind diesbezüglich auch noch größere Abmessungen denkbar. Hier ist allerdings zu berücksichtigen, daß bei derart großen Präsentationsflächen die Gefahr besteht, daß mehrere Zeigemedien gleichzeitig vorhanden sein können. Gegebenenfalls sind diesbezüglich programmtechnische Vorkehrungen zu treffen.

Beim letztgenannten Anwendungsfall kann die Erfindung beispielsweise dafür benutzt werden, bestimmte, in einem Schaufenster ausgestellte Elemente auszuwählen und über diese nähere Informationen anzuzeigen.

Weiterhin ist es möglich, die Präsentationsfläche als Projektionsfläche auszubilden, insbesondere als Projektionsfläche für eine Flipchart-Vorrichtung. Es können beispielsweise auf . Computermonitoren dargestellte Bilder auf eine Leinwand projeziert werden, vor der eine erfindungsgemäße Erfassungseinrichtung angeordnet ist. In diesem Fall kann dann beispielsweise das das projezierte Bild erzeugende Programm mittels eines vor bzw. auf der Leinwand bewegten Zeigestabs interaktiv bedient werden.

Bei einem ganz speziellen Anwendungsfall kann die Präsentationsfläche auch als über oder neben einem Förderband angeordnete transparente Scheibe ausgebildet sein, wobei auf dem Förderband beispielsweise zu sortierender Abfall transportiert wird und eine Person jeweils auf diejenigen Bereiche der Scheibe deutet, unter der mit einem in Förderrichtung nachgeordneten Greifer zu selektierende Elemente vorbeitransportiert werden. Die erfindungsgemäße Vorrichtung erfaßt dabei den Vorgang des Deutens und meldet die Position des zu selektierenden Elements an den Greifer weiter, welcher dann gezielt die Selektion vornehmen kann. Von Vorteil bei diesem Anwendungsfall ist, daß die erwähnte Person nicht in Kontakt mit dem zu selektierenden Abfall gelangt.

Die vorstehend genannten Anwendungsfälle sind lediglich beispielhaft angegeben; die Erfindung läßt sich jedoch auch noch bei einer Vielzahl anderer Anwendungsfälle (Info-/Servicestände, Spielprogramme, Bedienung von medizinischen und industriellen Geräten) sinnvoll einsetzen.

Die Erfindung wird nachfolgend beispielhaft unter Bezugnahme auf die Zeichnungen beschrieben; es zeigt:
- Fig. 1: eine schematische Draufsicht auf eine erfindungsgemäße Einrichtung gemäß der ersten Lösungsvariante,
- Fig. 2: eine Seitenansicht der in Fig. 1 dargestellten Vorrichtung, und
- Fig. 3: eine schematische Draufsicht auf eine erfindungsgemäße Einrichtung gemäß der zweiten Lösungsvariante unter Verwendung von Entfernungsmeßgeräten.

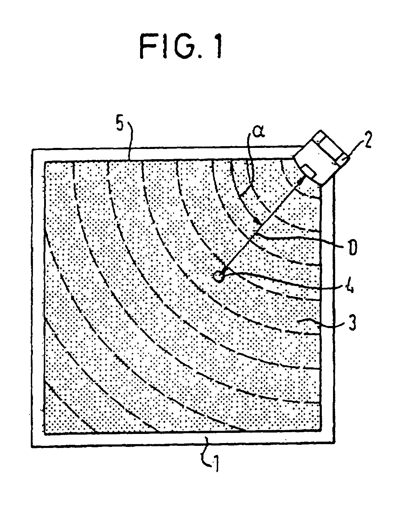

In Fig. 1 ist eine im wesentlichen quadratische Präsentationsfläche 1 dargestellt.

Im Bereich der rechten oberen Ecke dieser Präsentationsfläche 1 ist ein Scanner 2 angeordnet, welcher ein grau dargestelltes Überwachungsfeld 3 aufbaut. Das Überwachungsfeld 3 ist dabei von vom Scanner ausgesendeten Lichtstrahlen gebildet, welche in der Ebene des Überwachungsfeldes 3 verlaufen.

Wenn mittels eines Zeigemediums 4 auf die Präsentationsfläche 1 gedeutet wird, befindet sich dieses Zeigemedium zwangsläufig in dem Überwachungsfeld 3. Der Scanner 2 kann dann den Abstand D zwischen Scanner und Zeigemedium 4 sowie den Winkel α bezogen auf eine äußere Referenzlinie 5 des Scanners 2 ermitteln. Der Abstand D und der Winkel α liefern dabei exakt Aufschluß über die momentane Position des Zeigemediums 4 innerhalb des Überwachungsfeldes 3 bzw. auf der Präsentationsfläche 1.

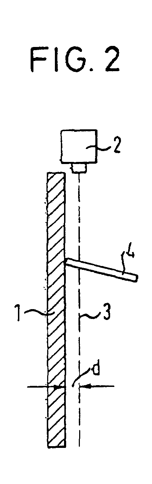

Fig. 2 zeigt die Vorrichtung gemäß Fig. 1 aus einer seitlichen Perspektive.

Es ist zu erkennen, daß das Überwachungsfeld 3 in einem Abstand d von der Präsentationsfläche 1 angeordnet ist.

Das auf die Präsentationsfläche 1 deutende Zeigemedium 4 durchdringt das Überwachungsfeld 3 und ist somit durch den Scanner 2 erfaßbar.

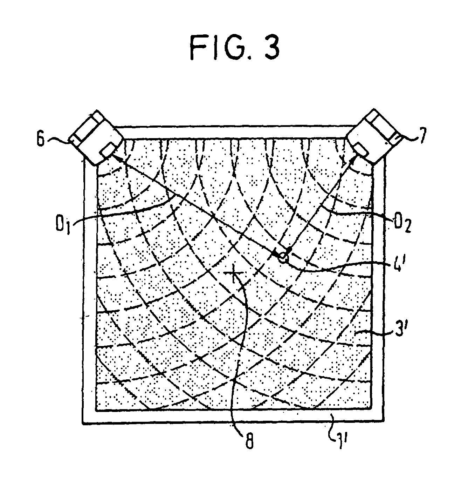

Fig. 3 entspricht im wesentlichen Fig. 1 mit dem Unterschied, daß anstelle des Scanners 2 zwei Entfernungsmesser 6, 7 vorgesehen sind.

Die Entfernungsmesser 6, 7 befinden sich dabei an zwei aneinander benachbarten Eckpunkten des quadratischen Überwachungsfeldes 3'.

Die die Entfernung messenden Lichtstrahlen der Entfernungsmesser 6, 7 sind auf jeweils 90° aufgeweitet, so daß jeder der beiden Entfernungsmesser 6, 7 das gesamte Überwachungsfeld 3' erfaßt. Die beiden von den Entfernungsmessern 6, 7 erfaßten Bereiche sind identisch, was dadurch erreicht wird, daß beide Entfernungsmesser 6, 7 jeweils auf den Mittelpunkt 8 des Überwachungsfeldes ausgerichtet sind.

Jeder der beiden Entfernungsmesser 6, 7 ermittelt jeweils den Abstand D₁ bzw. D₂ zwischen dem das Überwachungsfeld 3' durchdringenden Zeigemedium 4' und dem jeweiligen Entfernungsmesser 6 bzw. 7.

Aus den beiden Abständen D₁ und D₂ läßt sich bei bekanntem Abstand der Entfernungsmesser 6, 7 voneinander die genaue Position des Zeigemediums 4' im Überwachungsfeld 3' bzw. auf der Präsentationsfläche 1' eindeutig berechnen.

### Bezugszeichenliste

- 1: Präsentationsfläche
- 1': Präsentationsfläche
- 2: Scanner
- 3: Überwachungsfeld
- 3': Überwachungsfeld
- 4: Zeigemedium
- 4': Zeigemedium
- 5: Referenzlinie
- 6: Entfernungsmesser
- 7: Entfernungsmesser
- 8: Mittelpunkt

## Patentansprüche

1. Optische Erfassungseinrichtung zur Bestimmung der Position eines Zeigemediums (4) auf bzw. vor einer Präsentationsfläche (1) mit einem unmittelbar vor oder geringfügig beabstandet von der Präsentationsfläche (1) parallel zu dieser angeordneten optischen Überwachungsfeld (3), wobei zumindest ein Lichtstrahlen in der Ebene des Überwachungsfeldes (3) aussendender, das Überwachungsfeld (3) abtastender und auf die jeweilige Position des Zeigemediums (4) im Überwachungsfeld (3) bezogene Winkel- und Abstandsmaße liefernder Scanner (2) vorgesehen ist,
**dadurch gekennzeichnet,**
**daß** der Scanner (2) die Abstandsmaße jeweils durch eine direkte Messung des Abstands zwischen dem Scanner (2) und dem Zeigemedium (4) entlang einer Linie zwischen dem Scanner (2) und dem Zeigemedium (4) durch Nachweisen eines direkt in Richtung des Zeigemediums (4) ausgesandten und vom Zeigemedium (4) direkt in Richtung des Scanners (2) reflektierten Lichtstrahls liefert.

2. Optische Erfassungseinrichtung nach Anspruch 1,
**dadurch gekennzeichnet,**
**daß** der Scanner (2) im Randbereich des Überwachungsfeldes (3) angeordnet ist, wobei insbesondere der vom Scanner (2) erfaßte Winkelbereich in etwa zwischen 90° und 180° liegt.

3. Optische Erfassungseinrichtung nach einem der vorhergehenden Ansprüche,
**dadurch gekennzeichnet,**
**daß** der Scanner (2) in einem Eckbereich eines im wesentlichen rechteckigen Überwachungsfeldes (3) angeordnet ist, wobei insbesondere der vom Scanner (2) erfaßte Winkelbereich ungefähr 90° beträgt.

4. Optische Erfassungseinrichtung nach einem der vorhergehenden Ansprüche,
**dadurch gekennzeichnet,**
**daß** genau ein Scanner (2) vorgesehen ist, welcher das gesamte Überwachungsfeld (3) erfaßt.

5. Optische Erfassungseinrichtung zur Bestimmung der Position eines Zeigemediums (4') auf bzw. vor einer Präsentationsfläche (1') mit einem unmittelbar vor oder geringfügig beabstandet von der Präsentationsfläche (1') parallel zu dieser angeordneten optischen Überwachungsfeld (3'), wobei ausgehend von zwei unterschiedlichen Positionen Lichtstrahlen in der Ebene des Überwachungsfeldes (3') aussendende Entfernungs- bzw. Winkelmesser (6, 7) vorgesehen sind und daß der von jedem der beiden Entfernungs- bzw. Winkelmesser (6, 7) abgetastete Winkelbereich jeweils das gesamte Überwachungsfeld (3') erfaßt, wobei aus den von den Entfernungs- bzw. Winkelwerten die jeweilige Position des Zeigemediums (4') im Überwachungsfeld (3') berechenbar ist,
**dadurch gekennzeichnet,**
**daß** ein Abstandswerte liefernder Entfernungsmesser (6, 7) und entweder ein Winkelwerte liefernder Winkelmesser oder ein weiterer Abstandswerte liefernder Entfernungsmesser (7, 6) vorgesehen sind, wobei die Entfernungsmesser (6, 7) die Abstandswerte jeweils durch eine direkte Messung des Abstands zwischen dem jeweiligen Entfernungsmesser (6, 7) und dem Zeigemedium (4') entlang einer Linie zwischen dem jeweiligen Entfernungsmesser (6, 7) und dem Zeigemedium (4') durch Nachweisen eines direkt in Richtung des Zeigemediums (4') ausgesandten und vom Zeigemedium (4') direkt in Richtung des jeweiligen Entfernungsmessers (6, 7) reflektierten Lichtstrahls liefert.

6. Optische Erfassungseinrichtung nach Anspruch 5,
**dadurch gekennzeichnet,**
**daß** beide Entfernungs- bzw. Winkelmesser (6, 7) jeweils im Randbereich des Überwachungsfeldes (3') angeordnet sind

7. Optische Erfassungseinrichtung nach Anspruch 5 oder 6,
**dadurch gekennzeichnet,**
**daß** der von beiden Entfernungs- bzw. Winkelmessern (6, 7) jeweils erfaßte Winkelbereich in etwa zwischen 90° und 180° liegt.

8. Optische Erfassungseinrichtung nach einem der Ansprüche 5 bis 7,
**dadurch gekennzeichnet,**
**daß** die beiden Entfernungs- bzw. Winkelmesser (6, 7) an einander benachbarten Eckbereichen eines im wesentlichen rechteckigen Überwachungsfeldes (3') angeordnet sind, wobei insbesondere der von beiden Entfernungs- bzw. Winkelmessern (6, 7) jeweils erfaßte Winkelbereich ungefähr 90° beträgt.

9. Optische Erfassungseinrichtung nach einem der Ansprüche 5 bis 8,
**dadurch gekennzeichnet,**
**daß** die Winkelmesser als Drehstrahlscanner ausgebildet sind.

10. Optische Erfassungseinrichtung nach einem der vorhergehenden Ansprüche,
**dadurch gekennzeichnet,**
**daß** der Scanner (2) oder die Entfernungs- bzw. Winkelmesser (6, 7) geschützt in einem Gehäusebereich untergebracht sind, welcher mit einem Lichtaustrittsspalt versehen ist.

11. Optische Erfassungseinrichtung nach einem der vorhergehenden Ansprüche,
**dadurch gekennzeichnet,**
**daß** der Scanner (2) oder die Entfernungs- bzw. Winkelmesser (6, 7) bei einem sich im wesentlichen vertikal erstreckenden Überwachungsfeld (3, 3') in dessen oberen Randbereich oder oberhalb dieses Randbereichs angeordnet sind.

12. Optische Erfassungseinrichtung nach einem der vorhergehenden Ansprüche,
**dadurch gekennzeichnet,**
**daß** der Abstand zwischen der Präsentationsfläche (1, 1') und dem Überwachungsfeld (3, 3') zwischen 2 mm und 20 mm, insbesondere ungefähr 5 mm beträgt.

13. Optische Erfassungseinrichtung nach einem der vorhergehenden Ansprüche,
**dadurch gekennzeichnet,**
**daß** Präsentationsfläche (1, 1') und Überwachungsfeld (3, 3') in etwa gleich groß sind.

14. Optische Erfassungseinrichtung nach einem der vorhergehenden Ansprüche,
**dadurch gekennzeichnet,**
**daß** die Präsentationsfläche (1, 1') als Monitor, insbesondere als Monitor einer Größe zwischen 10 und 20 Zoll ausgebildet ist, oder daß die Präsentationsfläche (1, 1') als Schaufensterscheibe, insbesondere als rechteckige Schaufensterscheibe mit Diagonalabmessungen bis zu 10 m ausgebildet ist, oder daß die Präsentationsfläche (1, 1') als Projektionsfläche, insbesondere Flipchart-Präsentationsfläche ausgebildet ist, oder daß die Präsentationsfläche (1, 1') als über oder unter einem Gegenstände transportierenden Förderband angeordnete transparente Scheibe ausgebildet ist.

## Claims

1. Optical detection device for determining the position of an indicator medium (4) on or in front of a presentation surface (1) having an optically monitored field (3) arranged directly in front of or slightly spaced from the presentation surface (1) parallel to the latter, wherein at least one scanner (2) is provided which transmits light beams in the plane of the monitored field (3), which scans the monitored field (3) and delivers angular and distance measurements related to the respective position of the indicator medium (4) in the monitored field (3), **characterized in that** the scanner (2) delivers the distance measurements in each case by a direct measurement of the distance between the scanner (2) and the indicator medium (4) along a line between the scanner (2) and the indicator medium (4) by detecting a light beam transmitted directly in the direction of the indicator medium (4) and reflected by the indicator medium (4) directly in the direction of the scanner (2).

2. Optical detection device in accordance with claim 1, **characterized in that** the scanner (2) is arranged in the marginal region of the monitored field (3), with in particular the angular range detected by the scanner (2) lying approximately between 90° and 180°.

3. Optical detection device in accordance with any one of the previous claims, **characterized in that** the scanner (2) is arranged in a corner region of a substantially rectangular monitored field (3), with in particular the angular range detected by the scanner (2) amounting to approximately 90°.

4. Optical detection device in accordance with any one of the previous claims, **characterized in that** precisely one scanner (2) is provided which detects the entire monitored field (3).

5. Optical detection device for determining the position of an indicator medium (4') on or in frorit of a presentation surface (1'), with an optically monitored field (3') arranged directly in front of or slightly spaced from the presentation surface (1') parallel to the latter, wherein, starting from two different positions, range and/or angle measurement devices (6, 7) are provided which transmit light beams in the plane of the monitored field (3'), and in that the angular range scanned by each of the two range and/or angle measuring devices (6, 7) in each case embraces the full monitored field (3'), with the respective position of the indicator medium (4') in the monitored field (3') being calculable from the range and/or angle values, **characterized in that** a range measurement device (6, 7) delivering distance values and either an angle measuring device delivering angle values or a further range measuring device (7, 6) delivering further distance values are provided, wherein the range measurement device (6, 7) delivers the distance values in each case by a direct measurement of the distance between the respective range measurement device (6, 7) and the indicator medium (4') along a line between the respective range measurement device (6, 7) and the indicator medium (4') by detecting a light beam transmitted directly in the direction of the indicator medium (4') and reflected by the indicator medium (4') directly in the direction of the respective range measurement device (6, 7).

6. Optical detection device in accordance with claim 5, **characterized in that** the two range and/or angle measurement devices (6, 7) are respectively arranged in the edge region of the monitored field (3').

7. Optical detection device in accordance with claim 5 or claim 6, **characterized in that** the angular range detected by the two range and/or angle measurement devices (6, 7) in each case lies approximately between 90° and 180°.

8. Optical detection device in accordance with any one of claims 5 to 7, **characterized in that** the two range and/or angle measurement devices (6, 7) are arranged at neighbouring corner regions of a substantially rectangular monitored field (3'), with in particular the angular range detected by the two range and/or angle measurement devices (6, 7) in each case amounting to approximately 90°.

9. Optical detection device in accordance with any one of claims 5 to 8, **characterized in that** the angle measurement devices are formed as rotating beam scanners.

10. Optical detection device in accordance with any one of the preceding claims, **characterized in that** the scanner (2) or the range and/or angle measurement devices (6, 7) are protectively accommodated in a housing region which is provided with a light outlet gap.

11. Optical detection device in accordance with any one of the preceding claims, **characterized in that** the scanner (2) or the range/and or angle measurement devices (6, 7) are arranged, with a substantially vertically extending monitored field (3, 3'), in its upper marginal region or above this marginal region.

12. Optical detection device in accordance with any one of the preceding claims, **characterized in that** the spacing between the presentation surface (1, 1') and the monitored field (3, 3') amounts to between 2 mm and 20 mm, in particular to about 5 mm.

13. Optical detection device in accordance with any one of the preceding claims, **characterized in that** the presentation surface (1, 1') and monitored field (3, 3') are approximately the same size.

14. Optical detection device in accordance with any one of the preceding claims, **characterized in that** the presentation surface (1, 1') is formed as a monitor, in particular a monitor of a size between 10 and 20 inches; or **in that** the presentation surface (1, 1') is formed as a shop window pane, in particular as a rectangular shop window pane with diagonal dimensions of up to 10 m; or **in that** the presentation surface (1, 1') is formed as a projection surface, in particular as a flip-chart projection surface; or **in that** the presentation surface (1, 1') is formed as a transparent pane arranged above or below a conveyor belt transporting articles.

## Revendications

1. Dispositif de détection optique pour déterminer la position d'un indicateur (4) sur ou devant une surface de présentation (1), comportant un champ de surveillance optique (3) agencé immédiatement devant ou à faible distance de la surface de présentation (1) et parallèlement à celle-ci, dans lequel est prévu au moins un scanner (2) émettant des rayons lumineux dans le plan du champ de surveillance (3), palpant le champ de surveillance (3) et délivrant des dimensions d'angle et de distance se rapportant à la position respective de l'indicateur (4) dans le champ de surveillance (3),
**caractérisé en ce que** le scanner (2) délivre les dimensions de distance par une mesure respective directe de la distance entre le scanner (2) et l'indicateur (4) le long d'une ligne entre le scanner (2) et l'indicateur (4) par exploitation d'un rayon lumineux émis directement en direction de l'indicateur (4) et réfléchi par l'indicateur (4) directement en direction du scanner (2).

2. Dispositif de détection optique selon la revendication 1, **caractérisé en ce que** le scanner (2) est agencé dans la zone marginale du champ de surveillance (3), la plage angulaire détectée par le scanner (2) étant comprise en particulier approximativement entre 90° et 180°.

3. Dispositif de détection optique selon l'une ou l'autre des revendications précédentes, **caractérisé en ce que** le scanner (2) est agencé dans une zone de coin d'un champ de surveillance (3) sensiblement rectangulaire, la plage angulaire détectée par le scanner (2) étant en particulier d'environ 90°.

4. Dispositif de détection optique selon l'une quelconque des revendications précédentes, **caractérisé en ce qu'**il est prévu exactement un scanner (2) qui englobe la totalité du champ de surveillance (3).

5. Dispositif de détection optique pour déterminer la position d'un indicateur (4') sur ou devant une surface de présentation (1'), comportant un champ de surveillance optique (3') agencé immédiatement devant ou à faible distance de la surface de présentation (1') et parallèlement à celle-ci, dans lequel sont prévus des organes de mesure de distance ou d'angle (6, 7) émettant des rayons lumineux dans le plan du champ de surveillance (3') à partir de deux positions différentes, et la plage angulaire palpée par chacun des deux organes de mesure de distance ou d'angle (6, 7) englobe la totalité du champ de surveillance (3'), la position respective de l'indicateur (4') dans le champ de surveillance (3') pouvant être calculée à partir des valeurs de distance ou d'angle,
**caractérisé en ce qu'**il est prévu un organe de mesure de distance (6, 7) délivrant des valeurs de distance, et soit un organe de mesure d'angle délivrant des valeurs angulaires soit un autre organe de mesure de distance (7, 6) délivrant des valeurs de distance, dans lequel les organes de mesure de distance (6, 7) délivrent les valeurs de distance par une mesure respective directe de la distance entre l'organe de mesure de distance respectif (6, 7) et l'indicateur (4') le long d'une ligne entre l'organe de mesure de distance respectif (6, 7) et l'indicateur (4') par exploitation d'un rayon lumineux émis directement en direction de l'indicateur (4') et réfléchi par l'indicateur (4') directement en direction de l'organe de mesure de distance respectif (6, 7).

6. Dispositif de détection optique selon la revendication 5, **caractérisé en ce que** les deux organes de mesure de distance ou d'angle (6, 7) sont agencés chacun dans la zone marginale du champ de surveillance (3').

7. Dispositif de détection optique selon l'une ou l'autre des revendications 5 et 6, **caractérisé en ce que** la plage angulaire respective détectée par les deux organes de mesure de distance ou d'angle (6, 7) est comprise approximativement entre 90° et 180°.

8. Dispositif de détection optique selon l'une quelconque des revendications 5 à 7, **caractérisé en ce que** les deux organes de mesure de distance ou d'angle (6, 7) sont agencés dans des zones de coin mutuellement voisines d'un champ de surveillance (3') sensiblement rectangulaire, la plage angulaire détectée par les deux organes de mesure de distance ou d'angle (6, 7) étant en particulier d'environ 90°.

9. Dispositif de détection optique selon l'une quelconque des revendications 5 à 8, **caractérisé en ce que** les organes de mesure d'angle sont réalisés sous forme de scanners rotatifs.

10. Dispositif de détection optique selon l'une quelconque des revendications précédentes, **caractérisé en ce que** le scanner (2) ou les organes de mesure de distance ou d'angle (6, 7) sont logés de façon protégée dans une zone de boîtier qui est pourvue d'une fente de sortie de lumière.

11. Dispositif de détection optique selon l'une quelconque des revendications précédentes, **caractérisé en ce que** pour un champ de surveillance (3, 3') s'étendant sensiblement verticalement, le scanner (2) ou les organes de mesure de distance ou d'angle (6, 7) sont agencés dans sa zone marginale supérieure ou au-dessus de cette zone marginale.

12. Dispositif de détection optique selon l'une quelconque des revendications précédentes, **caractérisé en ce que** la distance entre la surface de présentation (1, 1') et le champ de surveillance (3, 3') est comprise entre 2 mm et 20 mm et s'élève en particulier à environ 5 mm.

13. Dispositif de détection optique selon l'une quelconque des revendications précédentes, **caractérisé en ce que** la surface de présentation (1, 1') et le champ de surveillance (3, 3') sont approximativement de taille égale.

14. Dispositif de détection optique selon l'une quelconque des revendications précédentes, **caractérisé en ce que** la surface de présentation (1, 1') est réalisée sous forme d'un écran, en particulier sous forme d'un écran d'une taille entre 10 et 20 pouces, ou **en ce que** la surface de présentation (1, 1') est réalisée sous forme de vitre de vitrine, en particulier sous forme de vitre de vitrine rectangulaire présentant des dimensions diagonales jusqu'à 10 m, ou **en ce que** la surface de présentation (1, 1') est réalisée sous forme de surface de projection, en particulier sous forme de surface de présentation d'un tableau de conférence, ou **en ce que** la surface de présentation (1, 1') est réalisée sous forme d'une plaque transparente agencée au-dessus ou au-dessous d'une bande de convoyage transportant des objets.
